(19) Europäisches Patentamt
European Patent Office
Office européen des brevets

(11) EP 4 648 158 A1

(12) EUROPEAN PATENT APPLICATION

(43) Date of publication:
**12.11.2025 Bulletin 2025/46**

(21) Application number: **25173140.2**

(22) Date of filing: **29.04.2025**

(51) International Patent Classification (IPC):
***H01M 10/0525*** *(2010.01)* ***H01M 50/403*** *(2021.01)*
***H01M 50/42*** *(2021.01)* ***H01M 50/426*** *(2021.01)*
***H01M 50/431*** *(2021.01)* ***H01M 50/446*** *(2021.01)*
***H01M 50/457*** *(2021.01)*

(52) Cooperative Patent Classification (CPC):
**H01M 50/403; H01M 10/0525; H01M 50/42; H01M 50/426; H01M 50/431; H01M 50/446; H01M 50/457**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 KR 20240058022**

(71) Applicant: **SAMSUNG SDI CO., LTD.**
**Yongin-si, Gyeonggi-do 17084 (KR)**

(72) Inventors:
- **Lee, Jung Seong**
  **16678 Suwon-si, Gyeonggi-do (KR)**
- **Kim, Yang Seob**
  **16678 Suwon-si, Gyeonggi-do (KR)**
- **Choi, Hyeon Seon**
  **16678 Suwon-si, Gyeonggi-do (KR)**
- **Lee, Yeon Ho**
  **16678 Suwon-si, Gyeonggi-do (KR)**
- **Han, Byong Joon**
  **16678 Suwon-si, Gyeonggi-do (KR)**
- **Kim, Hye Mi**
  **16678 Suwon-si, Gyeonggi-do (KR)**
- **Kim, Nam Ju**
  **16678 Suwon-si, Gyeonggi-do (KR)**
- **Lee, Jae Yeon**
  **16678 Suwon-si, Gyeonggi-do, (KR)**
- **Lee, Woo Sung**
  **16678 Suwon-si, Gyeonggi-do (KR)**
- **Park, Sang Hyun**
  **16678 Suwon-si, Gyeonggi-do (KR)**
- **Lee, Chan Kyu**
  **16678 Suwon-si, Gyeonggi-do (KR)**
- **Jo, Jung Mo**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) The present disclosure relates to a separator for a rechargeable lithium battery and a rechargeable lithium battery including the separator. The separator includes a porous substrate and a coating layer on a surface of the porous substrate. The coating layer includes a heat-resistant layer including a binder and a filler, and an adhesive layer including an adhesive binder on the heat-resistant layer. The binder includes a (meth)acryl-based binder including a first structural unit derived from (meth)acrylic acid, (meth)acrylate, or a salt thereof, a second structural unit derived from hydroxyalkyl (meth) acrylate, and a third structural unit derived from (meth) acrylamido sulfonic acid or a salt thereof. The filler has a particle diameter D50 ranging from 250 nm to 350 nm. The adhesive binder includes a fluorine-based adhesive binder having a hydroxyl group or a carboxylic acid group and a fluorine-based adhesive binder not having a hydroxyl group and a carboxylic acid group.



Processed by Luminess, 75001 PARIS (FR)

## Description

BACKGROUND

### 1. Field of the Disclosure

The present disclosure relates to a separator for a rechargeable lithium battery, and a rechargeable lithium battery including the separator.

### 2. Discussion of Related Art

With increasing presence of electronic devices using batteries, such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that include an active material capable of the intercalation and deintercalation of lithium ions, and produces electrical energy by oxidation and reduction reactions when the lithium ions are intercalated into and deintercalated from the positive electrode and the negative electrode.

The rechargeable lithium battery may further include a separator between the positive electrode and the negative electrode. The separator may have a low membrane resistance and a high heat resistance, resulting in low heat shrinkage.

SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery, the separator having a low membrane resistance, thereby increasing the capacity of a rechargeable lithium battery.

Another example embodiment includes a separator for rechargeable lithium battery, the separator having a low thermal shrinkage rate, thereby increasing the stability and lifetime of a rechargeable lithium battery.

Still another example embodiment includes a rechargeable lithium battery including the separator for a rechargeable lithium battery.

Another example embodiment includes a separator for a rechargeable lithium battery.

The separator for a rechargeable lithium battery includes a porous substrate and a coating layer on at least one surface of the porous substrate. The coating layer includes a heat-resistant layer including a binder and a filler, and an adhesive layer on the heat-resistant layer and including an adhesive binder. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The filler includes a filler having a particle diameter D50 ranging from 250 nm to 350 nm. The adhesive binder includes a mixture of a fluorine-based adhesive binder having a hydroxyl group or a carboxylic acid group and a fluorine-based adhesive binder not having a hydroxyl group and a carboxylic acid group.

Another example embodiment includes a rechargeable lithium battery.

The rechargeable lithium battery includes a positive electrode, a negative electrode, and the separator between the positive electrode and the negative electrode.

BRIEF DESCRIPTION OF THE DRAWINGS

FIG. 1 is a cross-sectional view illustrating a separator for a rechargeable lithium battery, according to one example embodiment.

FIGS. 2 to 5 are schematic cross-sectional views illustrating a rechargeable lithium battery, according to one example embodiment.

FIG. 6A is a view showing boehmite ceramic particles having an average particle diameter of about 300 nm.

FIG. 6B is a scanning electron microscope (SEM) image of an upper surface of a coating layer, in an example embodiment.

DETAILED DESCRIPTION

Hereinafter, example embodiments of the present disclosure are described in detail. However, the embodiments are presented as examples, the present disclosure is not limited thereto, and the present disclosure is only defined by the scope of the appended claims.

Unless otherwise stated herein, when a part such as a layer, a membrane, an area, a plate, and the like. is described as being disposed "on" another part, it includes not only a case where the part is "directly on" another part, but also a case where there are other parts therebetween.

Unless otherwise stated herein, the singular may also include the plural.

In the present specification, "a combination thereof" may indicate a mixture, stack, composite, copolymer, alloy, blend, or reaction product of constituents.

Unless otherwise defined herein, a particle diameter is an average particle diameter. The particle diameter refers to an average particle diameter D50, which refers to a diameter of a particle with a cumulative volume of 50% by volume in a particle diameter distribution. The average particle diameter D50 may be measured by methods known to those skilled in the art and for example, may be measured using a particle size analyzer, a transmission electron microscope photograph, or a scanning electron microscope photograph. As another method, the average particle diameter D50 may be obtained by measuring the particle diameter using a measuring device using dynamic light scattering, performing data analysis to count the number of particles for each particle size range, and then calculating the average particle diameter D50 therefrom. Alternatively, the average particle diameter D50 may be measured using a laser diffraction method. When measuring the average particle diameter by the laser diffraction method, for example, the average particle diameter D50 based on 50% of a particle diameter distribution in the measuring device may be calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W.

In the present specification, "(meth)acryl" refers to acryl and/or methacryl.

Hereinafter, unless otherwise defined, "substitution" indicates that hydrogen in a compound is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (For example, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (For example, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, For example, R denotes hydrogen, a C1 to C6 alkyl group, a C1 to C6 alkoxy group , or a C6 to C12 aryl group), a carboxyl group (-COOH) or a salt thereof (-C(=O)OM, For example, M denotes an organic or inorganic cation), a sulfonic acid group ($-SO_3H$) or a salt thereof ($-SO_3M$, For example, M denotes an organic or inorganic cation), and a phosphate group ($-PO_3H_2$) or a salt thereof ($-PO_3MH$ or $-PO_3M_2$, For example, M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

For example, in the chemical formulas, the symbol * refers to a part that is connected to the same or different atom, group, or structural unit.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less (X≤ and ≤Y)."

A separator for a rechargeable lithium battery according to one example embodiment includes a porous substrate, and a coating layer on at least one surface of the porous substrate. The coating layer includes a heat-resistant layer including a binder and a filler, and an adhesive binder on the heat-resistant layer and including an adhesive binder. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The filler has a particle diameter D50 ranging from 250 nm to 350 nm, and the adhesive binder includes a mixture of a fluorine-based adhesive binder having a hydroxyl group or a carboxylic acid group and a fluorine-based adhesive binder not having a hydroxyl group and a carboxylic acid group.

According to one example embodiment, the heat-resistant layer may be formed of or include a composition including the (meth)acryl-based binder and the filler having a particle diameter D50 ranging from 250 nm to 350 nm.

Because the coating layer has a significantly low membrane resistance and a low heat shrinkage rate, a separator for a rechargeable lithium battery with high heat resistance and low resistance can be formed. For example, the coating layer can provide a separator with high bonding strength to a positive electrode and a negative electrode. The high bonding strength can increase the lifetime and stability of a rechargeable lithium battery.

Because the coating layer has a low membrane resistance and a low heat shrinkage rate, a separator for a rechargeable lithium battery with high heat resistance and low resistance can be formed. This can increase the lifetime and stability of a rechargeable lithium battery. The coating layer may include the above-described adhesive binder, thereby increasing the bonding strength to a positive electrode and simultaneously or contemporaneously include the above-described (meth)acryl-based binder and the above-described filler, thereby exhibiting the above-described low heat shrinkage, low membrane resistance, and air permeability within desired ranges.

According to one example embodiment, the separator may have a membrane resistance in a range of 1 Ω or less.

According to one example embodiment, after the separator is left at 150 °C for 1 hour, a heat shrinkage rate in each of a mechanical direction (MD) and a transverse direction (TD) may be in a range of 6.5% or less.

According to one example embodiment, the separator may have a bonding strength to the positive electrode in a range of 0.75 gf/mm or more.

**Coating layer**

The coating layer may be or include a heat-resistant adhesive layer. The coating layer may include a heat-resistant layer, and an adhesive layer on the heat-resistant layer.

The heat-resistant layer may include a binder, and a (meth)acryl-based binder to be described below may be included in an amount in a range of 95 wt% or more, for example, ranging from 95 wt% to 100 wt%, from 99 wt% to 100 wt%, or 100 wt% of the binder.

The (meth)acryl-based binder may fix a filler to a porous substrate, allow the coating layer to be bonded to the porous substrate and an electrode, and contribute to increasing the heat resistance, air permeability, and oxidation resistance of a separator. For example, the (meth)acryl-based binder can facilitate the movement of lithium ions to reduce membrane resistance and increase ionic conductivity, improve the adhesion of the coating layer to the porous substrate and the electrode, and improve the dispersibility of the filler in the coating layer. For example, the (meth)acryl-based binder can provide a separator with low membrane resistance in a coating layer including a filler to be described below.

With respect to 100 mol% of the (meth)acryl-based binder, a total of the first structural unit, the second structural unit, and the third structural unit may be in a range of 95 mol% or more, for example, may range from 95 mol% to 100 mol%, or for example, may be 100 mol%. Within the above range, the above effects of the separator can be readily achieved.

The first structural unit may be derived from (meth)acrylic acid, (meth)acrylate, or a salt thereof and may be configured to fix the filler on the porous substrate and provide bonding strength so that the coating layer is bonded to the porous substrate and the electrode, and contribute to increasing the heat resistance and air permeability of the separator. For example, the first structural unit may have a carboxyl functional group (-C(=O)O-) in the structural unit, thereby improving the dispersibility of a coating slurry.

The first structural unit may be represented by any one or more of Chemical Formulas 1 to 3 below:

Chemical Formula 1: Chemical Formula 2: Chemical Formula 3:

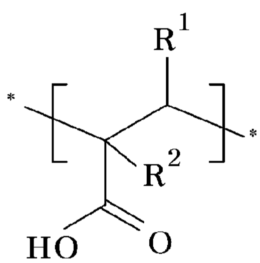

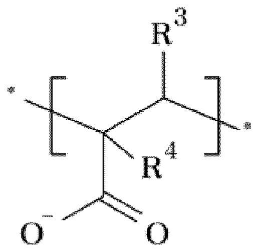

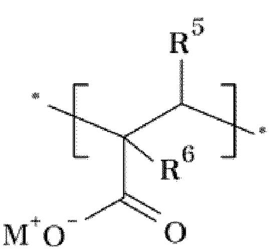

With respect to 100 mol% of the binder for a rechargeable lithium battery, the first structural unit may be included

in an amount ranging from 25 mol% to 65 mol%, for example, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65 mol%, from 30 mol% to 65 mol%, from 30 mol% to 60 mol%, or from 40 mol% to 65 mol%. When the first structural unit is included in the above range, the separator may exhibit a low membrane resistance, a desired or improved bonding strength to the porous substrate and the electrode, and desired or improved heat resistance, air permeability, and oxidation resistance.

According to one example embodiment, the first structural unit may include the structural unit represented by Chemical Formula 2 and the structural unit represented by Chemical Formula 3, and for example, a molar ratio of the structural unit represented by Chemical Formula 2 and the structural unit represented by Chemical Formula 3 may range from 10:1 to 1:2, from 10:1 to 1:1, or from 5:1 to 1:1.

According to another example embodiment, the first structural unit may include only the structural unit represented by Chemical Formula 2.

The second structural unit may be derived from hydroxyalkyl (meth)acrylate and may be configured to fix the filler on the porous substrate and provide bonding strength so that the coating layer is bonded to the porous substrate and the electrode. For example, the second structural unit may have a carboxyl functional group (-C(=O)O-) in the structural unit, thereby improving the dispersibility of a coating slurry.

The second structural unit may be represented by Chemical Formula 4 below:

Chemical Formula 4:

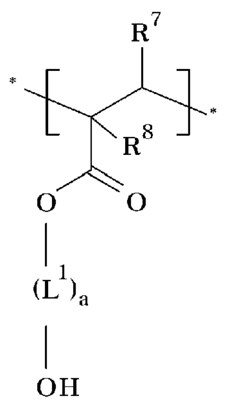

With respect to 100 mol% of the binder for a rechargeable lithium battery, the second structural unit may be included in an amount ranging from 1 mol% to 20 mol%, for example 1, 2, 3, 4, 5, 6, 7, 8, 9, 10, 11, 12, 13, 14, 15, 16, 17, 18, 19, 20 mol%, or from 5 mol% to 15 mol%. Within the above range, the bonding strength of the coating layer to the porous substrate and the electrode can be readily increased.

The second structural unit may be or include, for example, a structural unit derived from hydroxyalkyl (meth) acrylate. For example, the alkyl may be or include at least one of a C1 to C20 alkyl, a C1 to C10 alkyl, or a C1 to C6 alkyl.

The hydroxyalkyl (meth)acrylate may include, for example, one or more of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from (meth)acrylamido sulfonic acid or a salt thereof can reduce the membrane resistance of the separator by increasing the possibility of lithium ion movement in the presence of the first structural unit and the second structural unit.

The third structural unit may include a bulky functional group derived from (meth)acrylamido sulfonic acid or a salt thereof, thereby enhancing the heat resistance of the separator by increasing a glass transition temperature. Additionally, when the third structural unit includes a functional group derived from a salt of (meth)acrylamido sulfonic acid, a metal (M) may be moved through the third structural unit by the sulfonic acid functional group in which the metal (M) is substituted, thereby reducing membrane resistance.

The third structural unit may be represented by any one or more of Chemical Formula 5, 6, 7 below, or a combination thereof:

Chemical Formula 5: Chemical Formula 6: Chemical Formula 7:

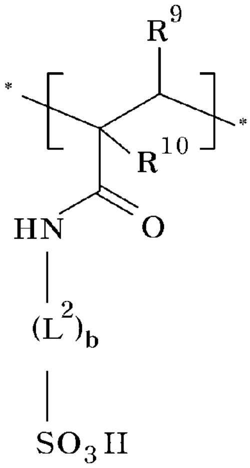 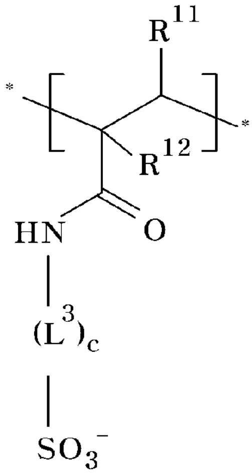 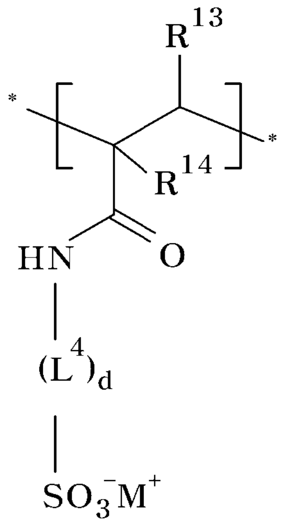

The third structural unit may include only any one, or two or more, of the structural unit represented by Chemical Formula 5, the structural unit represented by Chemical Formula 6, and the structural unit represented by Chemical Formula 7. As an example, the third structural unit may include the structural unit represented by Chemical Formula 6, and as another example, the third structural unit may include the structural unit represented by Chemical Formula 6 and the structural unit represented by Chemical Formula 7.

The third structural unit may be or include, for example, a structural unit derived from (meth)acrylamido alkane sulfonic acid or a salt thereof. For example, the alkane may be or include at least one of a C1 to C20 alkane, a C1 to C10 alkane, or a C1 to C6 alkane, and the alkyl may be or include at least one of a C1 to C20 alkyl, a C1 to C10 alkyl, or a C1 to C6 alkyl. The salt is composed of or includes the above-described sulfonic acid and a desired ion. The ion may be or include, for example, an alkali metal ion, and for example, the salt may be or include an alkali metal salt of sulfonic acid.

For example, the (meth)acrylamido alkane sulfonic acid may be or include 2-(meth)acrylamido-2-methylpropane sulfonic acid.

The third structural unit may be included in an amount ranging from 20 mol% to 65 mol%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65 mol%, from 30 mol% to 60 mol% of the (meth)acryl-based binder. When the third structural unit is included within the above range, the (meth)acryl-based binder and the separator including the (meth)acryl-based binder may exhibit significantly low membrane resistance.

Descriptions of Chemical Formulas 1 to 7 are as follows.

$R^1$ to $R^{14}$ each independently is or includes hydrogen or a C1 to C10 alkyl group. For example, $R^1$ to $R^7$ and $R^9$ to $R^{14}$ may each be or include hydrogen or a methyl group, and $R^8$ may be or include a methyl group.

$L^1$ to $L^4$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be or include a methylene group or an ethylene group, and $L^2$ to $L^4$ may each independently be or include $*-C(CH_3)_2-CH_2-*$.

a, b, c, and d may each be independently an integer ranging from 0 to 2. For example, a, b, c, and d may all be equal to 1.

M may be or include an alkali metal, and the alkali metal may be or include at least one of lithium, sodium, potassium, rubidium, or cesium. For example, M may be or include at least one of lithium or sodium.

A representative example of the binder for a rechargeable lithium battery according to one example embodiment is as in Chemical Formula 8 below:

Chemical Formula 8:

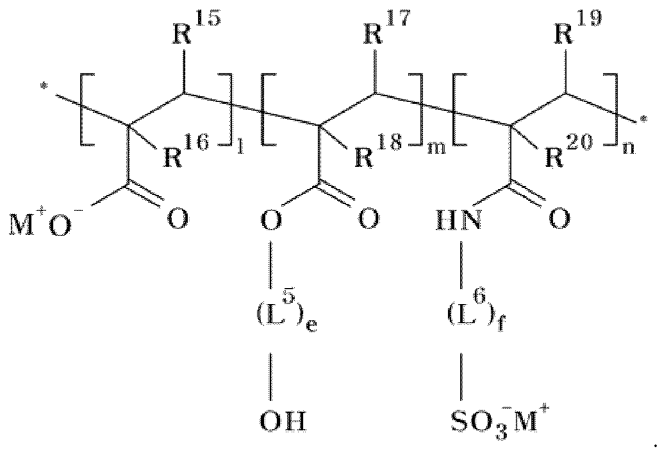

Description of Chemical Formula 8 is as follows.

$R^{15}$ to $R^{20}$ may each independently be or include hydrogen or a C1 to C10 alkyl group. For example, $R^{15}$ to $R^{17}$, $R^{19}$, and $R^{20}$ may each be or include hydrogen or a methyl group, and $R^{18}$ may be or include a methyl group.

$L^5$ and $L^6$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be or include a methylene group or an ethylene group, and $L^6$ may be or include $*\text{-}C(CH_3)_2\text{-}CH_2\text{-}*$. e and f may each be independently an integer ranging from 0 to 2. For example, e and f may all be equal to 1.

M may be or include an alkali metal, and the alkali metal may be or include at least one of lithium, sodium, potassium, rubidium, or cesium. For example, M may be or include at least one of lithium or sodium.

l, m, and n are a molar ratio of each unit, and l+m+n=1. For example, l, m, and n may satisfy $0.2 \leq l \leq 0.65$, $0.01 \leq m \leq 0.2$, and $0.2 \leq n \leq 0.65$, for example, $0.3 \leq l \leq 0.65$, $0.01 \leq m \leq 0.2$, and $0.2 \leq n \leq 0.65$, or $0.3 \leq l \leq 0.6$, $0.05 \leq m \leq 0.15$, and $0.3 \leq n \leq 0.6$.

The (meth)acryl-based binder may include an alkali metal. The alkali metal may be present in the form of a cation and for example, may be or include at least one of lithium, sodium, potassium, rubidium, or cesium. For example, the alkali metal may be combined with the (meth)acryl-based binder and may be present in the form of a salt. The alkali metal may be configured to assist in the synthesis of the (meth)acryl-based binder in an aqueous solvent, increase the bonding strength of the coating layer, and increase the heat resistance, air permeability, oxidation resistance, and the like, of the separator.

The alkali metal may be included in an amount ranging from 1 wt% to 40 wt%, for example, from 1 wt% to 30 wt%, from 1 wt% to 20 wt%, or from 10 wt% to 20 wt% of the alkali metal and the (meth)acryl-based binder. For example, the (meth)acryl-based binder and the alkali metal may be included in a weight ratio of 99:1 to 60:40, a weight ratio of 99:1 to 70:30, for example, a weight ratio of 99:1 to 80:20, or for example, a weight ratio of 90:10 to 80:20.

The alkali metal may be included in an amount ranging from 0.1 mol% to 1.0 mol% of the total content of the alkali metal and the (meth)acryl-based binder. When the alkali metal is included within the above range, the coating layer can have a desired or improved bonding strength, and a separator including the coating layer may exhibit desired or improved heat resistance, air permeability, and oxidation resistance.

The (meth)acryl-based binder may be in various forms, such as an alternating polymer in which the units are alternately distributed, a random polymer in which the units are randomly distributed, or a graft polymer in which some structural units are grafted.

The (meth)acryl-based binder may have a weight average molecular weight ranging from 100,000 g/mol to 1,000,000 g/mol, from 100,000 g/mol to 500,000 g/mol, from 100,000 g/mol to 150,000 g/mol, from 130,000 g/mol to 200,000 g/mol, or from 300,000 g/mol to 900,000 g/mol. When the weight average molecular weight of the (meth)acryl-based binder satisfies the above range, desired or improved bonding strength and low resistance may be exhibited. The weight average molecular weight may be a polystyrene-converted average molecular weight measured using gel permeation chromatography.

The (meth)acryl-based binder may be prepared by, e.g., a solution polymerization method.

According to one example embodiment, the (meth)acryl-based binder may be included in the coating layer of the separator in the form of a film.

The filler has a particle diameter D50 ranging from 250 nm to 350 nm. Because the separator has high heat resistance even when including a thin coating layer by including the filler, it is possible to provide a low thermal shrinkage

rate and increase the bonding strength of the separator to the electrode.

According to one example embodiment, a MD shrinkage rate and a TD shrinkage rate of the separator may each be in a range of 6.5% or less after the separator is left at 150 °C for 1 hour. For example, the coating layer of the separator may have a thickness ranging from 0.01 μm to 5 μm, for example, from 0.1 μm to 3 μm or from 0.1 μm to 1.5 μm.

According to one example embodiment, the filler having a particle diameter D50 ranging from 250 nm to 350 nm may be included in an amount in a range of 95 wt% or more, for example, ranging 95 wt% to 100 wt%, from 98 wt% to 100 wt%, or 100 wt% of the total filler in the coating layer.

For example, the filler may have a particle diameter D50 ranging from 280 nm to 300 nm, for example 250, 255, 260, 265, 270, 275, 280, 285, 290, 295, 300, 305, 310, 315, 320, 325, 330, 335, 340, 345, 350 nm.

The filler may be or include, for example, an inorganic filler, an organic filler, an organic-inorganic composite filler, or a combination thereof. The inorganic filler may be or include a ceramic material that can increase heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The organic filler may include at least one of an acrylic compound, an imide compound, an amide compound, or a combination thereof, but is not limited thereto. The organic filler may have a core-shell structure, but is not limited thereto. For example, the filler is an inorganic filler, and may be or include a ceramic such as boehmite.

The filler may be substantially spherical, substantially plate-shaped, substantially cubic, or amorphous. For example, the filler may be plate-shaped or cubic.

The filler may be included in a desired content with respect to the binder, for example, the (meth)acryl-based binder. According to one example embodiment, the (meth)acryl-based binder and the filler may be included in a mass ratio of 1:10 to 1:50, for example, 1:20 to 1:30. Within the above range, the heat shrinkage rate of the separator can be reduced.

The filler may be included in an amount ranging from 50 wt% to 99 wt%, for example, from 70 wt% to 99 wt%, for example, from 75 wt% to 99 wt%, for example, from 80 wt% to 99 wt%, for example, from 85 wt% to 99 wt%, for example, from 90 wt% to 99 wt%, or for example, from 95 wt% to 99 wt% of the total amount of the coating layer. When the filler is included within the above range, the separator may exhibit desired or improved heat resistance, durability, oxidation resistance, and stability.

By the adhesive binder, the separator can maintain the heat resistance and the bonding strength, and increase the stability and lifetime of a battery and also increase the resistance of the battery when the separator is later included in the battery.

The adhesive binder is or includes an organic-based binder and includes a mixture of a fluorine-based adhesive binder having a carboxylic acid group or a hydroxyl group and a fluorine-based adhesive binder not having a carboxylic acid group or a hydroxyl group. The fluorine-based binder having a hydroxyl group or a carboxylic acid group can increase the wet bonding strength of the separator. The wet bonding strength is described below.

According to one example embodiment, the fluorine-based adhesive binder having a carboxylic acid group or a hydroxyl group and the fluorine-based adhesive binder not having a carboxylic acid group or a hydroxyl group may be included in a weight ratio in a range of 1:1 to 1:5 in the mixture.

According to one example embodiment, the fluorine-based binder having a hydroxyl group or a carboxylic acid group may be or include a polyvinylidene fluoride (PVDF)-based binder having a hydroxyl group or a carboxylic acid group.

The polyvinylidene fluoride-based binder contains, for example, a structural unit derived from vinylidene fluoride, and a structural unit derived from a monomer having at least one hydroxyl group or carboxylic acid group. The structural unit derived from the monomer having at least one hydroxyl group or carboxylic acid group can provide improved wet bonding strength, durability, and air permeability. The monomer having at least one hydroxyl group or carboxylic acid group may be or include one or more of (meth)acrylic acid, itaconic acid or a derivative thereof, maleic acid or a derivative thereof, and a hydroxyalkane allyl ether.

The polyvinylidene fluoride-based binder may further include a structural unit derived from a monomer copolymerizable with vinylidene fluoride. The copolymerizable monomer may be or include one or more of trichloroethylene, chlorotrifluoroethylene, trifluoroethylene, hexafluoropropylene, ethylene tetrafluoride, and an ethylene monomer.

According to one example embodiment, the polyvinylidene fluoride-based binder is or includes a copolymer of vinylidene fluoride, a monomer having a hydroxyl group or a carboxylic acid group, and hexafluoropropylene and may include a structural unit derived from vinylidene fluoride, a structural unit derived from a monomer having a hydroxyl group or a carboxylic acid group, and a structural unit derived from hexafluoropropylene.

The polyvinylidene fluoride-based binder having a hydroxyl group or a carboxylic acid group may have a glass transition temperature Tg value ranging from - 70 °C to -20 °C and a weight average molecular weight ranging from 200,000 g/mol to 3,000,000 g/mol, from 200,000 g/mol to 2,000,000 g/mol, or from 300,000 g/mol to 1,500,000 g/mol. When the above ranges are satisfied, the separator can have a desired or improved bonding strength.

According to one example embodiment, the polyvinylidene fluoride-based compound may include a range of 80 mol% to 99 mol% of a vinylidene fluoride repeating unit, a range of 0.5 mol% to 10 mol% of a hexafluoropropylene

repeating unit, and a range of 0.5 mol% to 10 mol% of a repeating unit derived from a monomer having a hydroxyl group or a carboxylic acid group.

The polyvinylidene fluoride-based binder may be in various forms, such as an alternating polymer in which the units are alternately distributed, a random polymer in which the units are randomly distributed, or a graft polymer in which some structural units are grafted. For example, the polyvinylidene fluoride-based binder may be or include at least one of a linear polymer, a branched polymer, or a mixture thereof.

In the polyvinylidene fluoride-based binder, the vinylidene fluoride repeating unit may be included in an amount ranging from 90 mol% to 99.5 mol%, from 93 mol% to 99 mol%, or from 95 mol% to 99 mol%, and the hexafluoropropylene repeating unit may be included in an amount in a range of more than 0 mol%, 10 mol% or less, ranging from 0.5 mol% to 10 mol%, from 1 mol% to 10 mol%, from 1 mol% to 9 mol%, from 2 mol% to 7 mol%, or from 4 mol% to 6 mol%. Within the above range, the polyvinylidene fluoride-based compound may achieve chemical stability while exhibiting desired or improved solubility in low boiling point solvents and exhibit a desired or improved adhesiveness. Therefore, an adhesive layer may be formed using a low boiling point solvent without any additional process, and a decrease in air permeability that may inevitably occur due to the use of a high boiling point solvent can be reduced or prevented. The low boiling point solvent may be or include a solvent having a boiling point in a range of 80 °C or lower, such as for example, at least one of acetone, methyl ethyl ketone, ethyl isobutyl ketone, tetrahydrofuran, dimethyl formaldehyde, cyclohexane, or a mixed solvent thereof, but is not limited thereto.

The crystallinity of the polyvinylidene fluoride-based binder having a hydroxyl group or a carboxylic acid group may range from 40% to 65%, for example, from 45% to 60% or from 50% to 55%. For example, the binder may exhibit a desired or improved bonding strength. The crystallinity of the polyvinylidene fluoride-based binder may be higher than the crystallinity of the polyvinylidene fluoride-based binder to be described below.

A melting point of the polyvinylidene fluoride-based binder having a carboxylic acid group or a hydroxyl group may be in a range of 150 °C or higher, for example, may range from 150 °C to 200 °C.

The fluorine-based binder not having a carboxylic acid group and a hydroxyl group can increase the dry bonding strength of the adhesive layer. The dry bonding strength is described below.

The fluorine-based binder not having a carboxylic acid group and a hydroxyl group may include vinylidene fluoride and a repeating unit derived from the copolymerizable monomer. The copolymerizable monomer may be or include one or more of trichloroethylene, chlorotrifluoroethylene, trifluoroethylene, hexafluoropropylene, ethylene tetrafluoride, and an ethylene monomer.

The fluorine-based binder not having a carboxylic acid group and a hydroxyl group may have various forms such as, e.g., an alternating polymer, a random polymer, or a graft polymer. The fluorine-based binder not having a carboxylic acid group may be or include a linear polymer, a branched polymer, or a mixture thereof and may be or include a polymer with more branched chains than the fluorine-based binder having a carboxylic acid group.

The fluorine-based binder not having a carboxylic acid group and a hydroxyl group may include a vinylidene fluoride repeating unit and a hexafluoropropylene repeating unit.

The vinylidene fluoride repeating unit may be included in an amount ranging from 90 mol% to 99.5 mol%, from 93 mol% to 99 mol%, or from 95 mol% to 99 mol% with respect to the binder. When the vinylidene fluoride repeating unit is included within the above range, the binder can achieve desired or improved bonding strength, electrolyte impregnability, and the like.

When the hexafluoropropylene repeating unit is included in an amount in a range of more than 0 mol% to 10 mol% with respect to the binder and is included in an amount ranging from 0.5 mol% to 10 mol%, from 1 mol% to 9 mol%, from 2 mol% to 8 mol%, from 3 mol% to 7 mol%, or from 4 mol% to 6 mol%, the binder can achieve chemical stability while exhibiting a desired or improved solubility in low boiling point solvents and exhibit a desired or improved adhesiveness. Therefore, an adhesive layer may be formed using a low boiling point solvent without any additional process, and a decrease in air permeability that may inevitably occur due to the use of a high boiling point solvent can be reduced or prevented.

The fluorine-based binder not having a carboxylic acid group and a hydroxyl group may have a glass transition temperature Tg ranging from -70 °C to 20 °C, and a weight average molecular weight ranging from 800,000 to 2,000,000 or from 800,000 to 1,900,000. When the fluorine-based binder has the weight average molecular weight within the above range, an adhesive layer including the fluorine-based binder may exhibit desired or improved wet bonding strength and dry bonding strength. The weight average molecular weight may be a polystyrene-converted average molecular weight measured using gel permeation chromatography.

The crystallinity of the binder ranges from 35% to 45%, for example, from 35% to 40%. When the binder has a crystallinity within the above range, the adhesive layer including the binder exhibits a desired or improved dry bonding strength. The crystallinity of the binder may be lower than the crystallinity of the fluorine-based binder having a hydroxyl group or a carboxylic acid group.

A melting point of the polyvinylidene fluoride-based binder not having a carboxylic acid group and a hydroxyl group may be in a range of 150 °C or higher, for example, may range from 150 °C to 200 °C.

Both types of binders may be manufactured by various known methods such as, e.g., emulsion polymerization, suspension polymerization, bulk polymerization, or solution polymerization, and for example, may be manufactured by emulsion polymerization.

The wet bonding strength and the dry bonding strength are measured by methods below. A battery is manufactured by the following method, and the wet bonding strength and the dry bonding strength are measured.

**Manufacture of battery**

Manufacture of negative electrode:

A slurry for a negative electrode active material was prepared by mixing 97 wt% graphite particles with an average particle diameter of 25 μm, 1.5 wt% styrene-butadiene rubber (SBR) binder, and 1.5 wt% carboxymethyl cellulose (CMC), adding the mixture to distilled water, and stirring the mixture for 60 minutes using a mechanical stirrer. A negative electrode was manufactured by applying the slurry on a 10 μm thick copper current collector using a doctor blade, drying the slurry in a hot air dryer at 100 °C for 0.5 hours, and then re-drying and roll-pressing the slurry for 4 hours under vacuum and 120 °C conditions.

Manufacture of positive electrode

A slurry for a positive electrode active material was prepared by mixing 97 wt% $LiCoO_2$, 1.5 wt% carbon black powder as a conductive material, and 1.5 wt% polyvinylidene fluoride (PVDF), adding the mixture to N-methyl-2-pyrrolidone solvent, and then stirring the mixture for 30 minutes using a mechanical stirrer. A positive electrode was manufactured by applying the slurry on a 20 μm thick aluminum current collector using a doctor blade, drying the slurry in a hot air dryer at 100 °C for 0.5 hours, and then re-drying and roll-pressing the slurry for 4 hours under vacuum and 120 °C conditions.

Electrode assembly jelly roll

An electrode assembly jelly roll was manufactured by interposing a separator between the manufactured positive electrode and negative electrode, and winding the separator. The jelly roll was inserted into a pouch, an electrolyte was injected therein, and the pouch was vacuum-sealed. As the electrolyte, a solution in which 1.3M $LiPF_6$ was dissolved in a mixed solvent of ethylene carbonate (EC), ethyl methyl carbonate (EMC), and diethyl carbonate (DEC) in a volume ratio of 3:5:2 was included.

A rechargeable lithium battery was manufactured by pressing the jelly roll at a temperature of 80 °C for 3 minutes while applying a pressure of 11.7 $kgf/cm^2$ to the jelly roll inserted into the pouch.

Wet bonding strength

In a lithium battery obtained by impregnating a battery assembly including a positive electrode, a negative electrode, and a separator with an electrolyte, and then pressing the separator under conditions of 10 to 20 $kgf/cm^2$, a temperature ranging from 70 to 90 °C, and a time ranging from 1 to 5 minutes, the electrode bonding strength (bending strength) of the separator measured using a 3-point bending method is shown.

As the electrolyte, a solution in which 1.3M $LiPF_6$ was dissolved in a mixed solvent of ethylene carbonate (EC)/ethyl methyl carbonate (EMC)/diethyl carbonate (DEC) in a volume ratio of 3/5/2 was included. The battery assembly in the jelly roll state inserted into the pouch was pressed at 80 °C and 11.7 $kgf/cm^2$ for 180 seconds.

**Dry bonding strength**

In a lithium battery obtained by pressing a battery assembly including a positive electrode, a negative electrode, and a separator under conditions of 10 $kgf/cm^2$ to 20 $kgf/cm^2$, a temperature ranging from 70°C to 90 °C, and a time ranging from 5 minutes to 20 minutes, electrode bonding strength (bending strength) of the separator measured using the 3-point bending method is shown.

A battery assembly in a jelly roll state was manufactured by interposing the separator between the manufactured positive electrode and negative electrode and winding the separator. The electrode assembly was inserted into the pouch, an electrolyte was injected therein, and the pouch was vacuum-sealed.

The battery assembly inserted into the pouch was pressed at 85 °C and 11.7 $kgf/cm^2$ for 10 seconds and evaluated using the electrode bonding strength (bending strength) of the separator using the 3-point bending method.

For the electrode bonding strength (bending strength) of the separator, the bonding strength between an active

material layer of the positive electrode and the separator was measured using a 3-point bending (INSTRON) method. A pouch that had undergone a 0.1 C charging/discharging process was pressed at a speed of 5 mm/min using a jig, and a MAX value (N, MPa) from a zero point to 5 mm bending was measured. Evaluation conditions of the 3-point bending (INSTRON) method are as follows:

Lower span width: 27 mm, Lower span diameter: 5 mm
Upper jig diameter: 5 mm, Load cell: 1000N

The adhesive binder may be included in an amount ranging from 1 wt% to 20 wt%, for example, 5 wt% to 20 wt%, for example, 5 wt% to 15 wt% with respect to the total amount of the coating layer. Within the above range, bonding strength to the electrode can be exhibited, and battery resistance does not increase, and thus there may be no limitation in capacity implementation.

The coating layer may have a total thickness ranging from 0.01 μm to 20 μm, and within the above range, may have a thickness ranging from 0.01 μm to 5 μm, from 0.1 μm to 3 μm, or from 0.1 μm to 1.5 μm.

A ratio of the thickness of the coating layer to the thickness of the porous substrate may range from 0.05 to 0.5, for example, from 0.05 to 0.4, from 0.05 to 0.3, or from 0.1 to 0.2. Within the above range, the separator may exhibit desired or improved air permeability, heat resistance, bonding strength, and the like. For example, "thickness of the coating layer" indicates a thickness of one coating layer when the coating layer is formed on only one surface of the porous substrate, and indicates a thickness of two coating layers when the coating layer is formed on both surfaces of the porous substrate.

**Porous substrate**

The porous substrate may be or include a substrate having multiple pores and commonly included in electrochemical devices. The porous substrate may be or include a polymer membrane formed of or including any one polymer such as or including at least one of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have a desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. For example, the polyolefin-based resin may include a non-olefin resin in addition to an olefin resin, or include a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

The separator for a rechargeable lithium battery according to one example embodiment may exhibit desired or improved air permeability and have an air permeability value of, for example, less than 200 sec/100 cc, for example, 190 sec/100 cc or less, or 180 sec/100 cc or less. That is, the separator may have an air permeability value of less than 40 sec/100 cc·1 μm per unit thickness, for example, 30 sec/100 cc·1 μm or less, or 25 sec/100 cc·1 μm or less. For example, the air permeability refers to the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be obtained by measuring the time it takes for 100 cc of air to pass through the separator using an air permeability measurement device (EG01-55-1MR, Asahi Seiko Co., Ltd.).

A separator for a rechargeable lithium battery according to one example embodiment may be manufactured by forming a heat-resistant layer by applying a composition for forming a heat-resistant layer on one surface, or on both surfaces, of a porous substrate, and then drying the heat-resistant layer and forming an adhesive layer by applying an adhesive binder on the heat-resistant layer and then drying the adhesive layer.

FIG. 1 is a cross-sectional view illustrating a separator for a rechargeable lithium battery, according to one example embodiment. Referring to FIG. 1, the separator for a rechargeable lithium battery includes a porous substrate 1 and a coating layer 2 on both surfaces of the porous substrate 1. The coating layer 2 may include a heat-resistant layer 5 including a (meth)acryl-based binder 4 and a filler 3, and an adhesive layer 7 on the heat-resistant layer 5 and including an adhesive binder 6.

According to one example embodiment, the heat-resistant layer may have a total thickness ranging from 0.1 μm to 5.0 μm, for example, from 0.5 μm to 4.0 μm or from 1.0 μm to 3.0 μm. According to one example embodiment, the adhesive layer may have a total thickness ranging from 0.1 μm to 5.0 μm, for example, 0.3 μm to 3.0 μm.

Rechargeable lithium battery

According to one example embodiment, the rechargeable lithium battery includes the separator for a rechargeable lithium battery; a positive electrode; and a negative electrode.

The separator for rechargeable lithium battery refers to the description described above. The separator for rechargeable lithium battery may be located between the positive electrode and the negative electrode.

Positive electrode

A positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_dX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_dO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, **P,** or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be 0.5 wt% to 5 wt%, respectively, based on 100 wt% of the positive electrode active material layer.

The binder is configured to attach the positive electrode active material particles to each other, and to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as or including a polyphenylene derivative; or a mixture thereof.

Al may be included as the current collector, but is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, substantially sheet-shaped, flake-shaped, substantially sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

The binder may be configured to attach the negative electrode active material particles to each other, and to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any

material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be a or include at least one of carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. For example, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more.

For example, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIGS. 2 to 5 are schematic views illustrating rechargeable lithium batteries according to example embodiments. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following are merely example embodiments of the present disclosure, and the present disclosure is not limited to the following examples.

**Preparation Example 1**

In a 3 L four-necked separable flask provided with a stirrer, a thermometer, and a cooling tube, a process of adding distilled water (1249.72 g), a 20% aqueous lithium hydroxide solution (203.69 g, 1.05 equivalents with respect to the total amount of acrylic acid and 2-acrylamido-2-methylpropane sulfonic acid), acrylic acid (AA, 0.40 mol), 2-hydroxyethyl methacrylate (HEMA, 0.10 mol), 2-acrylamido-2-methylpropane sulfonic acid (AMPS, 0.5 mol), and ammonium persulfate (0.001 mol), then reducing an internal pressure to 10 mmHg using a diaphragm pump, and returning the internal pressure to a normal pressure using nitrogen was repeated three times. The reaction was carried out for 12 hours while controlling the temperature of the reaction solution to be stable between 65 °C and 70 °C. After cooling to room temperature, a non-volatile component (NV) in about 10 mL of the reaction solution was measured, and the measurement result was 9.8 wt% (theoretical value: 10%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid lithium salt, the second structural unit derived from 2-hydroxyethyl methacrylate, and the third structural unit derived from 2-acrylamido-2-methylpropane sulfonic acid lithium salt was 40:10:50.

**Preparation Example 2**

Poly(acrylic acid-co-2-hydroxyethyl methacrylate-co-2-acrylamido-2-methylpropane sulfonic acid) lithium salt was prepared by changing the content of each monomer in Preparation Example 1. A molar ratio of acrylic acid lithium salt, 2-hydroxyethyl methacrylate, and 2-acrylamido-2-methylpropane sulfonic acid lithium salt was 30:10:60. A non-volatile component in about 10 mL of the reaction solution (reaction product) was measured and the measurement result was 9.0 wt% (theoretical value: 10%).

**Preparation Example 3**

An acryl-based binder was prepared in the same manner as in Preparation Example 1, with a difference that acrylic acid and 2-hydroxyethyl methacrylate (HEMA) were used and 2-acrylamido-2-methylpropane sulfonic acid was not used. The acrylic acid lithium salt and the 2-hydroxyethyl methacrylate were included in a molar ratio of 42:58. The non-volatile component of the reaction solution was 9.0 wt% (theoretical value: 10%).

**Preparation Example 4**

An acryl-based binder was prepared in the same manner as in Preparation Example 1, with a difference that acrylic acid and 2-acrylamido-2-methylpropane sulfonic acid were used and 2-hydroxyethyl methacrylate was not used. The acrylic acid lithium salt and the 2-acrylamido-2-methylpropane sulfonic acid lithium salt were included in a molar ratio of 74:26. The non-volatile component of the reaction solution was 9.0 wt% (theoretical value: 10%).

**Preparation Example 5**

An acryl-based binder was prepared in the same manner as in Preparation Example 1, with a difference that 2-hydroxyethyl methacrylate and 2-acrylamido-2-methylpropane sulfonic acid were used and acrylic acid was not used. The 2-hydroxyethyl methacrylate and the 2-acrylamido-2-methylpropane sulfonic acid lithium salt were included in a molar ratio of 74:26. The non-volatile component of the reaction solution was 9.0 wt% (theoretical value: 10%).

Table 1 below shows the molar ratio of each monomer in the (meth)acryl-based binders prepared in Preparation Examples 1 to 5.

Table 1:

| | Molar ratio of monomer | | |
|---|---|---|---|
| | AA | HEMA | AMPS |
| Preparation Example 1 | 40 | 10 | 50 |
| Preparation Example 2 | 30 | 10 | 60 |
| Preparation Example 3 | 42 | 58 | 0 |
| Preparation Example 4 | 74 | 0 | 26 |
| Preparation Example 5 | 0 | 74 | 26 |

**Example 1**

A dispersion was prepared by mixing the (meth)acryl-based binder (10 wt% in distilled water) prepared in Preparation Example 1 and boehmite (particle diameter D50: 300 nm, plate-shaped, Eston's BG200) as a filler in a mass ratio of 1: 30 (the (meth)acryl-based binder and the filler are 1 part by weight and 30 parts by weight) based on solid content, adding the mixture to a water solvent, and then milling and dispersing the mixture at 25 °C for 30 minutes using a bead mill. A composition for forming a heat-resistant layer was prepared by adding water to the dispersion so that the total solid content was 20 wt%.

Heat-resistant layers were formed by coating both surfaces of a polyethylene-based film (thickness: 5.5 μm, CZMZ, air permeability: 110 sec/100 cc, and puncture strength: 360 kgf) as a porous substrate with the composition for forming the heat-resistant layer using a die coating method and then drying the heat-resistant layer in an oven at 70 °C for 10 minutes.

A first binder solution was prepared by adding 8 wt% polyvinylidene fluoride-hexafluoropropylene-based binder 75130 having a carboxylic acid group (a weight average molecular weight: 1.3 million g/mol, a molar ratio of 98:2 for the polyvinylidene fluoride and the hexafluoropropylene, further including acrylic acid as a monomer, a glass transition temperature: -30 °C, a melting point: 154 °C, crystallinity: 53%) as an adhesive binder to acetone and stirring the first binder solution at 40 °C for 3 hours using a stirrer. A second binder solution was prepared by adding 8 wt% polyvinylidene fluoride-hexafluoropropylene-based binder LBG having a carboxylic acid group (a weight average molecular weight: 1.3 million g/mol, a molar ratio of 98:2 for the polyvinylidene fluoride and the hexafluoropropylene, not including acrylic acid as a monomer, a glass transition temperature: -30 °C, a melting point: 151 °C, crystallinity: 40%) as an adhesive binder to acetone and stirring the second binder solution at 40 °C for 3 hours using the stirrer. A composition for an adhesive layer was prepared by mixing the first binder and the second binder in a weight ratio of 5:5.

A separator for a rechargeable lithium battery was manufactured by forming adhesive layers with a total thickness of 0.7 μm by directly coating one surface of each of the heat-resistant layers with the prepared composition for an adhesive layer at a speed of 80 m/min in a low volume manner and then drying the composition at 60 °C in an absolute vapor amount (average value) of 14 g/$m^3$.

**Example 2**

A separator for a rechargeable lithium battery was manufactured in the same manner as in Example 1, with a difference that in Example 1, the (meth)acryl-based binder prepared in Preparation Example 2 was used instead of the (meth)acryl-based binder prepared in Preparation Example 1.

**Example 3**

A separator for a rechargeable lithium battery was manufactured in the same manner as in Example 1, with a difference that in Example 1, boehmite (particle diameter D50: 250 nm, cubic, Eston) was used as a filler.

**Example 4**

A separator for a rechargeable lithium battery was manufactured in the same manner as in Example 1, with a difference that in Example 1, boehmite (particle diameter D50: 350 nm, plate-shaped, Eston) was used as a filler.

**Comparative Example 1**

A separator for a rechargeable lithium battery was manufactured in the same manner as in Example 1, with a difference that in Example 1, the (meth)acryl-based binder prepared in Preparation Example 3 was used instead of the (meth)acryl-based binder prepared in Preparation Example 1.

**Comparative Example 2**

A separator for a rechargeable lithium battery was manufactured in the same manner as in Example 1, with a difference that in Preparation Example 1, the (meth)acryl-based binder prepared in Preparation Example 4 was used instead of the (meth)acryl-based binder prepared in Preparation Example 1.

**Comparative Example 3**

A separator for a rechargeable lithium battery was manufactured in the same manner as in Example 1, with a

difference that in Preparation Example 1, the (meth)acryl-based binder prepared in Preparation Example 5 was used instead of the (meth)acryl-based binder prepared in Preparation Example 1.

**Comparative Example 4**

A separator for a rechargeable lithium battery was manufactured in the same manner as in Example 1, with a difference that in Example 1, boehmite (particle diameter D50: 200 nm, cubic, Eston) was used as a filler.

**Comparative Example 5**

A separator for a rechargeable lithium battery was manufactured in the same manner as in Example 1, with a difference that in Example 1, boehmite (particle diameter D50: 400 nm, plate-shaped, Eston) was used as a filler.

**Comparative Example 6**

A separator for a rechargeable lithium battery was manufactured in the same manner as in Example 1, with a difference that only polyvinylidene fluoride-hexafluoropropylene binder 75130 having a carboxylic acid group was used as an adhesive binder.

**Comparative Example 7**

A separator for a rechargeable lithium battery was manufactured in the same manner as in Example 1, with a difference that only polyvinylidene fluoride-hexafluoropropylene binder LBG not having a carboxylic acid group was used as an adhesive binder.

**Manufacture of battery**

Manufacture of negative electrode:

A slurry for a negative electrode active material was prepared by mixing 97 wt% graphite particles with an average particle diameter of 25 μm as a negative electrode active material, 1.5 wt% styrene-butadiene rubber (SBR) binder, and 1.5 wt% carboxymethyl cellulose (CMC), adding the mixture to distilled water, and stirring the mixture for 60 minutes using a mechanical stirrer. A negative electrode was manufactured by applying the slurry on a 10 μm thick copper current collector using a doctor blade, drying the slurry in a hot air dryer at 100 °C for 0.5 hours, and then re-drying and roll-pressing the slurry for 4 hours under vacuum and 120 °C conditions.

Manufacture of positive electrode:

A slurry for a positive electrode active material was prepared by mixing 97 wt% $LiCoO_2$ as a positive electrode active material 1.5 wt% carbon black powder as a conductive material, and 1.5 wt% polyvinylidene fluoride (PVdF), adding the mixture to N-methyl-2-pyrrolidone solvent, and then stirring the mixture for 30 minutes using a mechanical stirrer. A positive electrode was manufactured by applying the slurry on a 20 μm thick aluminum current collector using a doctor blade, drying the slurry in a hot air dryer at 100 °C for 0.5 hours, and then re-drying and roll-pressing the slurry for 4 hours under vacuum and 120 °C conditions.

Electrode assembly jelly roll

An electrode assembly jelly roll was manufactured by interposing the separators obtained according to the Examples and Comparative Examples between the manufactured positive electrode and negative electrode and winding the separators. The jelly roll was inserted into a pouch, an electrolyte was injected therein, and the pouch was vacuum-sealed. As the electrolyte, a solution in which 1.3M $LiPF_6$ was dissolved in a mixed solvent of ethylene carbonate (EC), ethyl methyl carbonate (EMC), and diethyl carbonate (DEC) in a volume ratio of 3:5:2 was used.

A rechargeable lithium battery was manufactured by pressing the jelly roll at a temperature of 80 °C for 3 minutes while applying a pressure of 11.7 kgf/cm$^2$ to the jelly roll inserted into the pouch.

FIG. 6A is a view showing boehmite ceramic particles having an average particle diameter of 300 nm, and FIG. 6B is an SEM image of an upper surface of a coating layer in an example. Referring to FIG. 6A, the dispersion of plate-shaped boehmite can be confirmed. Referring to FIG. 6B, the adhesive layer of the organic-based adhesive binder can be confirmed.

**Heat shrinkage rate after being left at 150 °C for 1 hour (units:** %)

Samples were manufactured by cutting the separators for a rechargeable lithium battery of Examples and Comparative Examples to a size of 8 cm × 8 cm. A shrinkage rate in each of a mechanical direction (MD) and a transverse direction (TD) was calculated by drawing a square with a size of 5 cm×5 cm on surfaces of the samples, then putting the samples between pieces of paper or alumina powder, leaving the samples in an oven at 150 °C for 1 hour, taking the samples out, and measuring the side dimensions of the drawn square. The shrinkage rate was calculated according to Equation 1 below.

Equation 1:

$$\text{Shrinkage rate} = (L0 - L1) / L0 \times 100.$$

L0 denotes an initial length of the separator, and L1 denotes a length of the separator after being left at 150 °C for 1 hour.

**Coating density (units: g/cm$^3$)**

Before forming the heat-resistant layer and the adhesive layer, a thickness "a" and a unit weight "b" of the porous substrate with a size of 10 cm×10 cm were measured. After forming the heat-resistant layer and the adhesive layer, a coating thickness "e" and a coating weight "f" were calculated by measuring a total thickness "c" and a unit weight "d." A coating density was calculated by dividing the coating weight by the coating thickness.

$$\text{Coating thickness (e)} = c - a$$

$$\text{Coating weight (f)} = d - b$$

$$\text{Coating density} = f / e$$

**Air permeability (units: sec/100 cc)**

The air permeability was measured by a method of measuring the time (units: seconds) it took for 100 cc of air to pass through the separator using a measurement device (EG01-55-1MR, Asahi Seiko).

Air permeability measurement device setting conditions:
Measurement pressure: 0.5 kg/cm$^2$, cylinder pressure: 2.5 kg/cm$^2$, set time: 10 seconds

**Bonding strength to positive electrode (units: gf/mm)**

Each of the separators of the Examples and Comparative Examples was cut into a width of 25 mm and a length of 80 mm, and polyethylene nonwoven fabric was also cut into the same size. The manufactured electrode was cut into a width of 30 mm and a length of 80 mm. A unit cell was manufactured by arranging an electrode on one surface of each separator and arranging polyethylene nonwoven fabric and an electrode on the other surface.

An electrolyte (solution in which 1.3M $LiPF_6$ was dissolved in a mixed solvent of ethylene carbonate (EC)/ethyl methyl carbonate (EMC)/diethyl carbonate (DEC) in a volume ratio of 3/5/2) was injected into a pouch with a size of 10 cm×10 cm, the unit cell was immersed therein for 12 hours, and then taken out, and adhesion was performed under conditions of 80 °C and 300 kgf/cm for 1 hour. After the separator and the positive electrode were taken out of the pouch, the positive electrode and separator were unfolded 180° and a force required to separate the positive electrode from the separator was measured using a tension measurement device (Tinius Olsen, HT400).

**Membrane resistance (units: Ω)**

Membrane resistance was evaluated by electrochemical impedance spectroscopy (EIS) resistance. Test cells were manufactured by impregnating the separators manufactured in the Examples and Comparative Examples in a mixed solvent of ethylene carbonate, ethyl methyl carbonate, and dimethyl carbonate (2/1/7 volume ratio) in which 1.5M $LiPF_6$ was dissolved, inserting the separators into a lead tab-attached aluminum foil electrode, and sealing the separators in an

aluminum pack, and the resistance (Ω) of these test cells was measured by an AC impedance method (measurement frequency: 100 kHz) at 20 °C.

Table 2:

| | | Example | | | | Comparative Example | | | | | | |
|---|---|---|---|---|---|---|---|---|---|---|---|---|
| | | 1 | 2 | 3 | 4 | 1 | 2 | 3 | 4 | 5 | 6 | 7 |
| Binder | | Preparation Example 1 | Preparation Example 2 | Preparation Example 1 | Preparation Example 1 | Preparation Example 3 | Preparation Example 4 | Preparation Example 5 | Preparation Example 1 | Preparation Example 1 | Preparation Example 1 | Preparation Example 1 |
| Filler | Shape | Plate-shaped | Plate-shaped | Cubic | Plate-shaped | Plate-shaped | Plate-shaped | Plate-shaped | Cubic | Plate-shaped | Plate-shaped | Plate-shaped |
| | D50 | 300 | 300 | 250 | 350 | 300 | 300 | 300 | 200 | 400 | 300 | 300 |
| Binder:filler | | 1:30 | 1:30 | 1:30 | 1:30 | 1:30 | 1:30 | 1:30 | 1:30 | 1:30 | 1:30 | 1:30 |
| Adhesive binder | Type | PVDF Two types | PVDF Two types | PVDF Two types | PVDF Two types | PVDF Two types | PVDF Two types | PVDF Two types | PVDF Two types | PVDF Two types | PVDF One type | PVDF One type |
| Thickness of adhesive layer (both surfaces) | | 0.7 | 0.7 | 0.7 | 0.7 | 0.7 | 0.7 | 0.7 | 0.7 | 0.7 | 0.7 | 0.7 |
| Loading amount of adhesive layer | | 0.8 | 0.8 | 0.8 | 0.8 | 0.8 | 0.8 | 0.8 | 0.8 | 0.8 | 0.8 | 0.8 |
| Coating density | | 1.10 | 1.09 | 1.15 | 1.05 | 1.11 | 1.12 | 1.08 | 1.21 | 1.02 | 1.11 | 1.12 |
| Air permeability | | 165 | 163 | 167 | 162 | 168 | 166 | 164 | 164 | 163 | 165 | 167 |
| Heat shrinkage rate (MD/TD) | | 2.6/0.8 | 2.8/1.1 | 1.1/0.6 | 6.5/4.8 | 2.1/0.9 | 2.2/1.0 | 2.3/0.9 | 1.1/0.2 | 7.9/6.2 | 2.5/0.9 | 2.4/1.0 |
| Bonding strength to positive electrode | | 0.79 | 0.81 | 0.99 | 0.78 | 0.80 | 0.96 | 0.81 | 1.21 | 0.65 | 0.61 | 0.63 |
| Membrane resistance | | 0.85 | 0.84 | 0.86 | 0.84 | 1.08 | 1.16 | 1.20 | 1.11 | 1.05 | 0.86 | 0.88 |

As shown in Table 2, the separators of the Examples can exhibit a low membrane resistance and a low heat shrinkage rate, thereby increasing the capability, stability, and lifetime of the battery.

On the other hand, the separators of Comparative Examples 1 to 3 not having the (meth)acryl-based binder of the present disclosure exhibited a higher membrane resistance than the Examples. The separators of Comparative Examples 4 and 5 including the (meth)acryl-based binder and not including the filler of the present disclosure, exhibited a higher membrane resistance than the Examples, and in Comparative Example 5, the heat shrinkage rate was also high. The separators of Comparative Examples 6 and 7 not including the adhesive binder of the present disclosure exhibited low bonding strength to the positive electrode.

A separator for a rechargeable lithium battery according to one example embodiment can exhibit a low membrane resistance and a low heat shrinkage rate, thereby increasing the capability, stability, and lifetime of the battery.

Although example embodiments of the present disclosure have been described above, the present disclosure is not limited thereto and may be modified in any form within the scope of the claims, the detailed description of the present disclosure, and the accompanying drawings, and the modifications also fall within the scope of the present disclosure.

## Claims

1. A separator (30) for a rechargeable lithium battery (100), the separator (30) comprising:

   a porous substrate (1); and
   a coating layer (2) on at least one surface of the porous substrate (1),
   wherein the coating layer (2) includes a heat-resistant layer (5) including a binder (4) and a filler (3), and an adhesive layer (7) including an adhesive binder (6) located on the heat-resistant layer (5),
   the binder (6) includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof,
   the filler (3) includes a filler (3) having a particle diameter D50 ranging from 250 nm to 350 nm measured by a laser diffraction method, and
   the adhesive binder (6) includes a mixture of a fluorine-based adhesive binder having a hydroxyl group or a carboxylic acid group and a fluorine-based adhesive binder not having a hydroxyl group and a carboxylic acid group.

2. The separator of claim 1, wherein a mass ratio of the (meth)acryl-based binder (6) to the filler (3) is in a range of 1:10 to 1:50.

3. The separator of claim 1 or 2, wherein the filler (3) is one of plate-shaped and cubic.

4. The separator of any one of the preceding claims, wherein the filler (3) comprises boehmite.

5. The separator of any one of the preceding claims, wherein the first structural unit is represented by at least one of Chemical Formula 1, 2, and 3:

   Chemical Formula 1: Chemical Formula 2: Chemical Formula 3:

   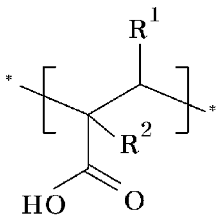 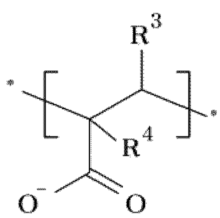 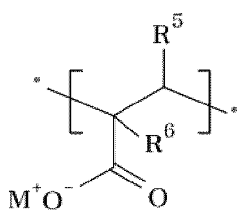 ,

   the second structural unit is represented by Chemical Formula 4:

Chemical Formula 4:

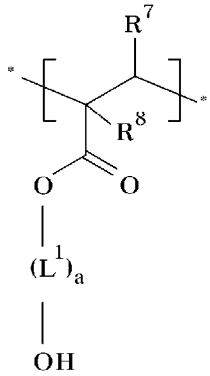

,

the third structural unit is represented by at least one of Chemical Formula 5, 6, and 7:

Chemical Formula 5: Chemical Formula 6: Chemical Formula 7:

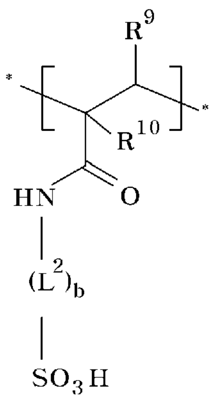

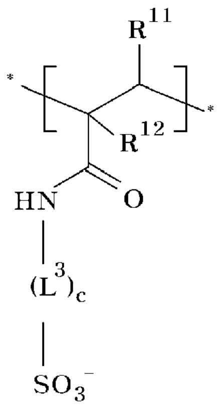

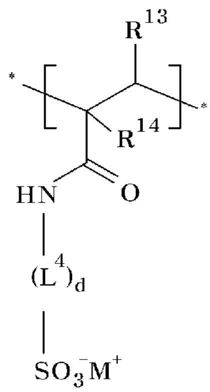

,

in Chemical Formulas 1 to 7:

$R^1$ to $R^{14}$ each independently comprises hydrogen or a C1 to C10 alkyl group,
$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, and d are each independently an integer ranging from 0 to 2, and
M comprises an alkali metal,
wherein "substitution" indicates that hydrogen is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen, a hydroxy group (-OH), a nitro group ($-NO_2$), a cyano group (-CN), an amino group (-NRR') (R and R' are each independently hydrogen or a C1 to C6 alkyl group), a sulfobetaine group ($-RR'N+(CH_2)_nSO_3-$ (n is a natural number from 1 to 10; R and R' are each independently hydrogen or a C1 to C6 alkyl group), a carboxybetaine group ($-RR'N+(CH_2)_nCOO-$ (n is a natural number from 1 to 10; R and R' are each independently hydrogen or a C1 to C6 alkyl group), an azido group ($-N_3$), an amidino group ($-C(=NH)NH_2$), a hydrazino group ($-NHNH_2$), a hydrazono group ($=N(NH_2)$)), a carbamoyl group ($-C(O)NH_2$), a thiol group (-SH), an acyl group (-C(=O)R (R denotes hydrogen or a C1 to C6 alkyl group, a C1 to C6 alkoxy group , or a C6 to C12 aryl group), a carboxyl group (-COOH) or a salt thereof (-C(=O)OM (M denotes an organic or inorganic cation), a sulfonic acid group ($-SO_3H$) or a salt thereof ($-SO_3M$, M denotes an organic or inorganic cation), and a phosphate group ($-PO_3H_2$) or a salt thereof ($-PO_3MH$ or $-PO_3M_2$, M denotes an organic or inorganic cation).

**6.** The separator of any one of the preceding claims, wherein the (meth)acryl-based binder comprises:

the first structural unit in an amount ranging from 25 mol% to 65 mol%,
the second structural unit in an amount ranging from 1 mol% to 20 mol%, and
the third structural unit in an amount ranging from 20 mol% to 65 mol%.

**7.** The separator of any one of the preceding claims, wherein the (meth)acryl-based binder is represented by Chemical Formula 8:

Chemical Formula 8:

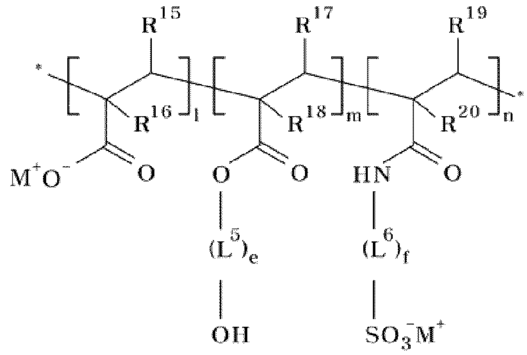

,

in Chemical Formula 8,

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
M comprises an alkali metal,
e and f are each independently an integer ranging from 0 to 2, and
1, m, and n are a molar ratio of each unit and l+m+n=1,
wherein "substitution" indicates that hydrogen is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen, a hydroxy group (-OH), a nitro group ($-NO_2$), a cyano group (-CN), an amino group (-NRR') (R and R' are each independently hydrogen or a C1 to C6 alkyl group), a sulfobetaine group ($-RR'N+(CH_2)_nSO_3-$ (n is a natural number from 1 to 10; R and R' are each independently hydrogen or a C1 to C6 alkyl group), a carboxybetaine group ($-RR'N+(CH_2)_nCOO-$ (n is a natural number from 1 to 10; R and R' are each independently hydrogen or a C1 to C6 alkyl group), an azido group ($-N_3$), an amidino group ($-C(=NH)NH_2$), a hydrazino group ($-NHNH_2$), a hydrazono group ($=N(NH_2)$)), a carbamoyl group ($-C(O)NH_2$), a thiol group (-SH), an acyl group (-C(=O)R (R denotes hydrogen or a C1 to C6 alkyl group, a C1 to C6 alkoxy group , or a C6 to C12 aryl group), a carboxyl group (-COOH) or a salt thereof (-C(=O)OM (M denotes an organic or inorganic cation), a sulfonic acid group ($-SO_3H$) or a salt thereof ($-SO_3M$, M denotes an organic or inorganic cation), and a phosphate group ($-PO_3H_2$) or a salt thereof ($-PO_3MH$ or $-PO_3M_2$, M denotes an organic or inorganic cation).

**8.** The separator of any one of the preceding claims, wherein the fluorine-based adhesive binder comprises a polyvinylidene fluoride-based binder.

**9.** The separator of claim 8, wherein the polyvinylidene fluoride-based binder further comprises a hexafluoropropylene repeating unit.

**10.** The separator of any one of the preceding claims, wherein the coating layer (2) has a thickness ranging from 0.1 μm to 3.0 μm.

**11.** A rechargeable lithium battery (100) comprising:

a positive electrode (10);
a negative electrode (20); and
the separator (30) of any one of the preceding claims between the positive electrode (10) and the negative electrode (20).

FIG. 1

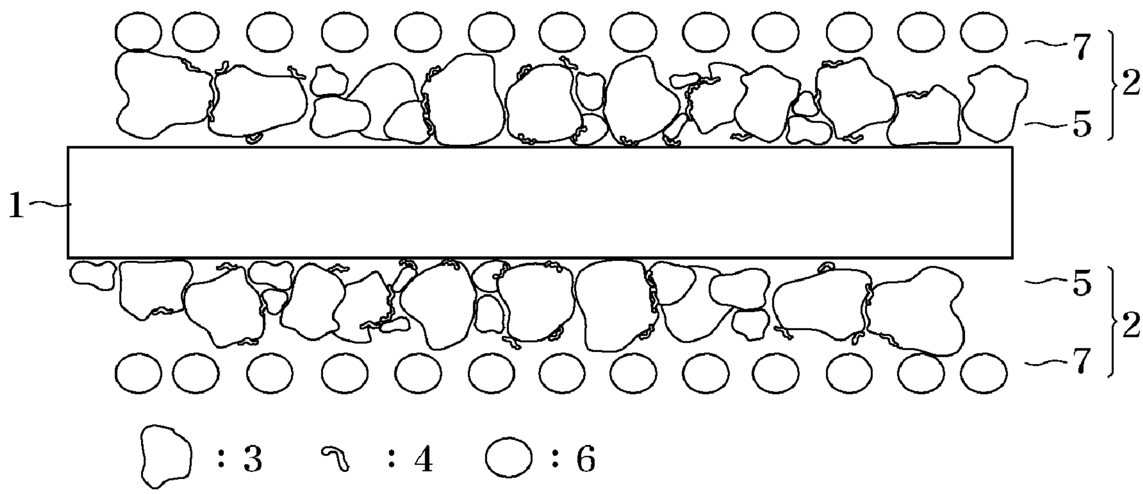

FIG. 2

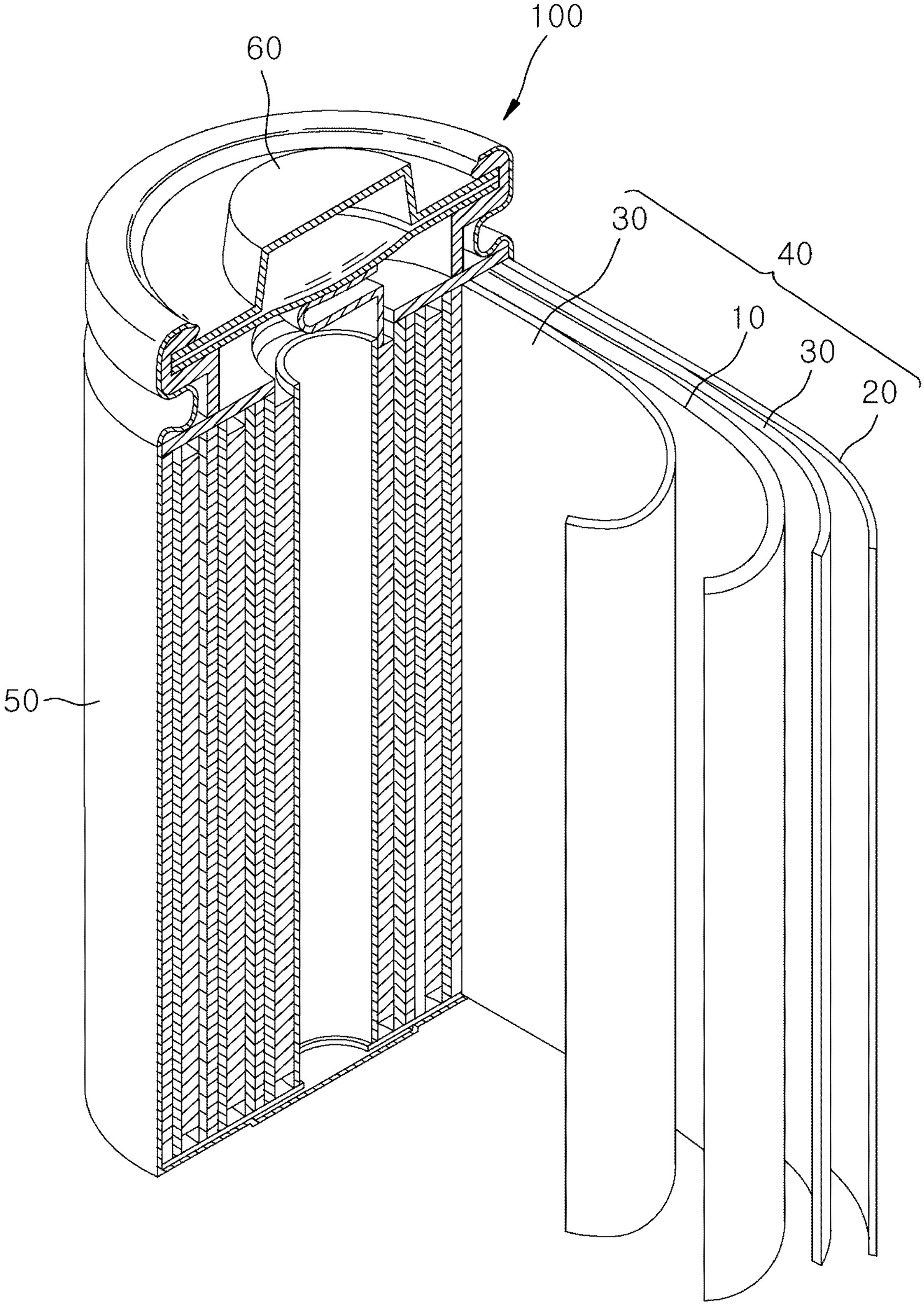

FIG. 3

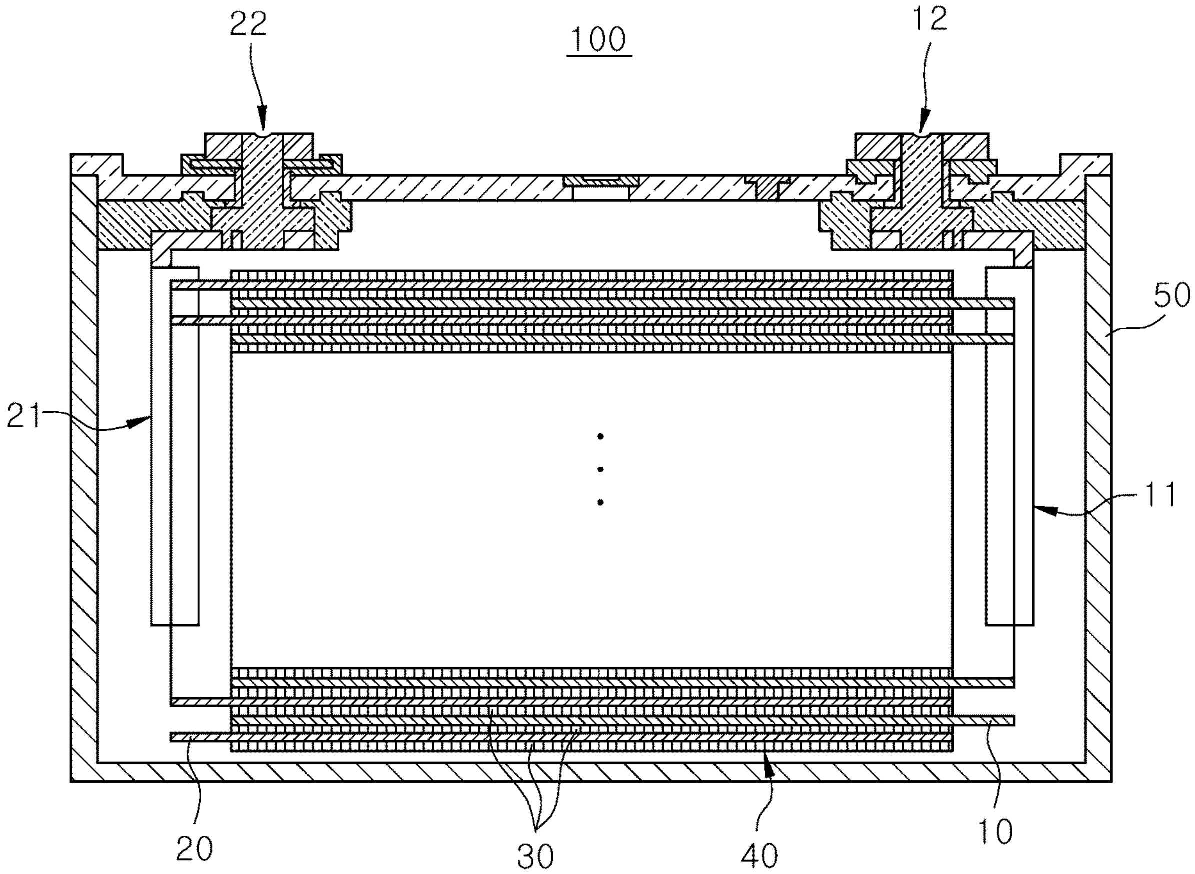

FIG. 4

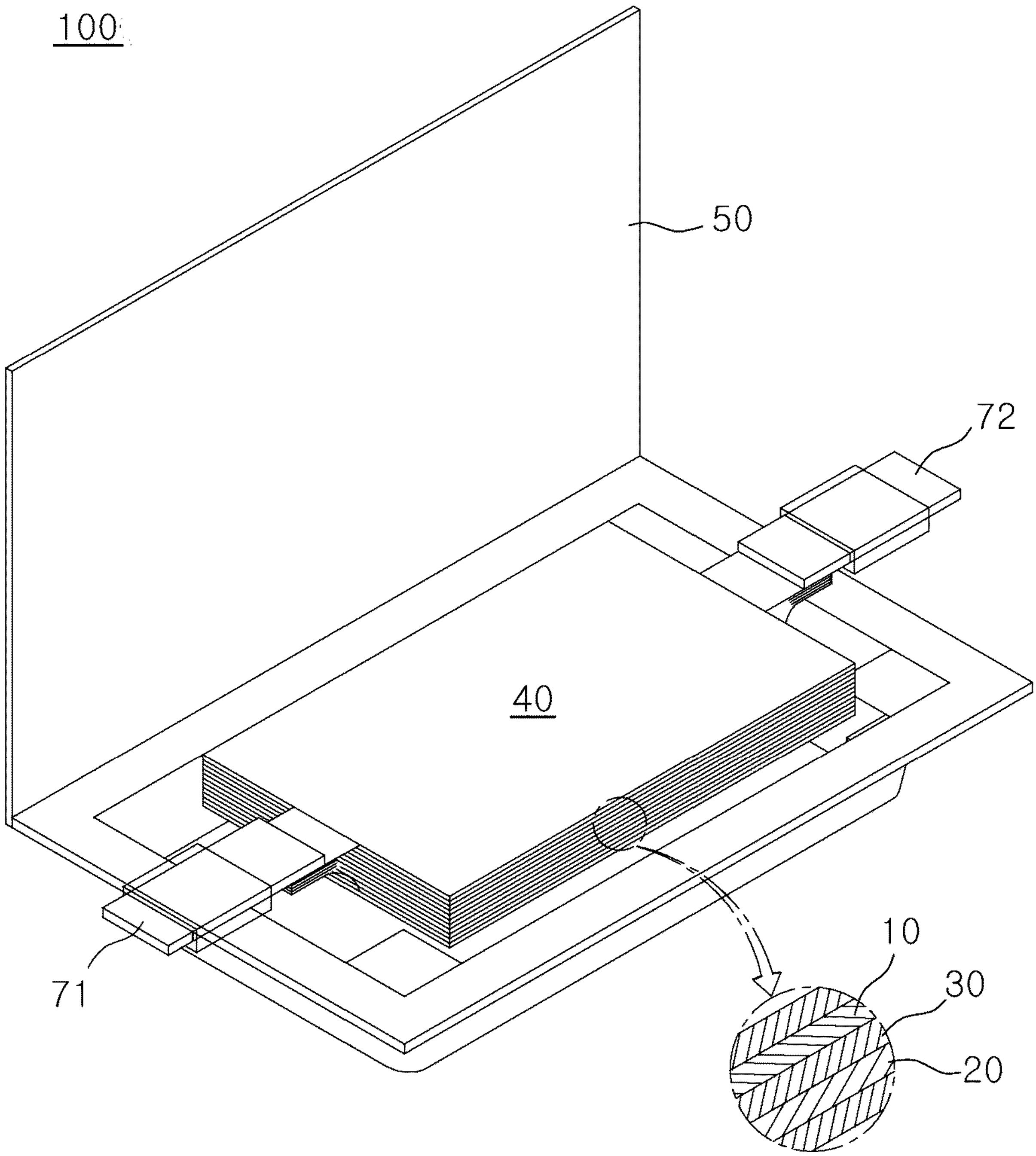

FIG. 5

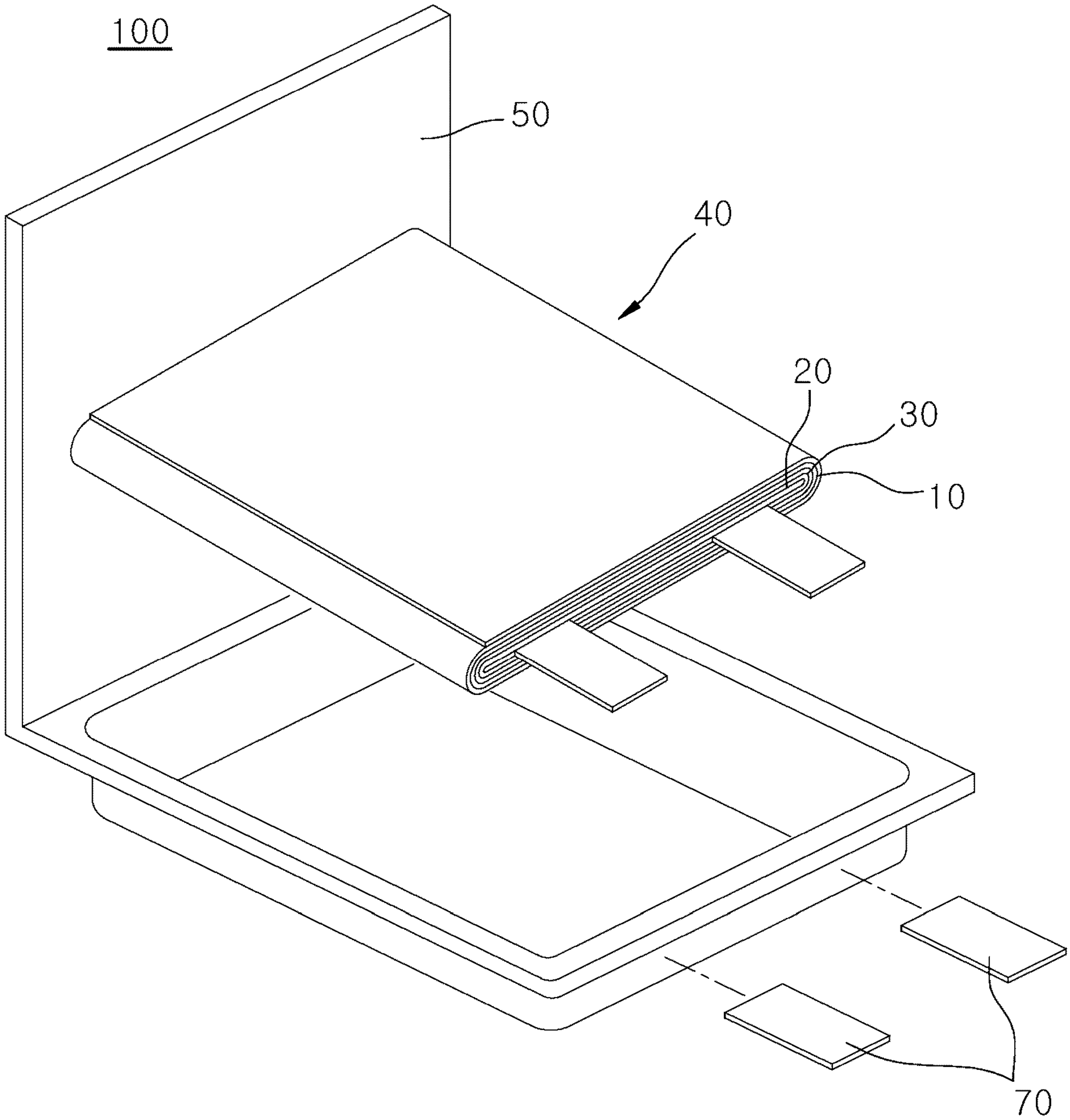

FIG. 6a

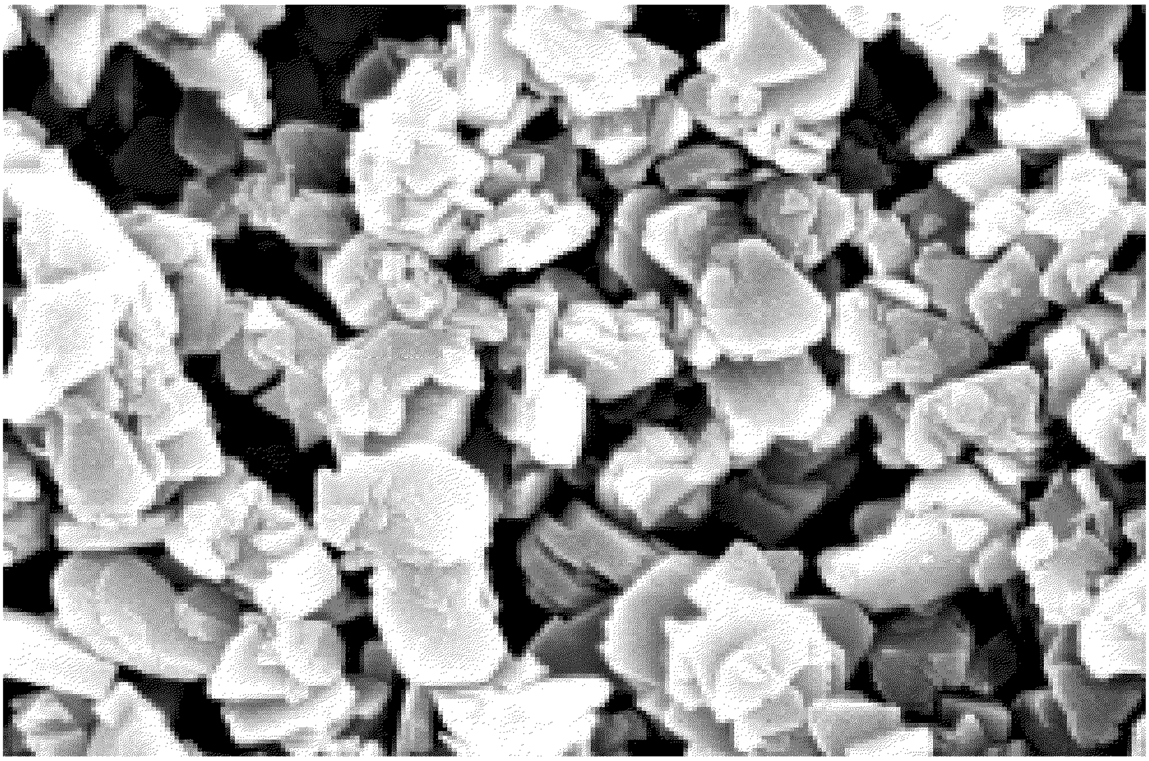

FIG. 6b

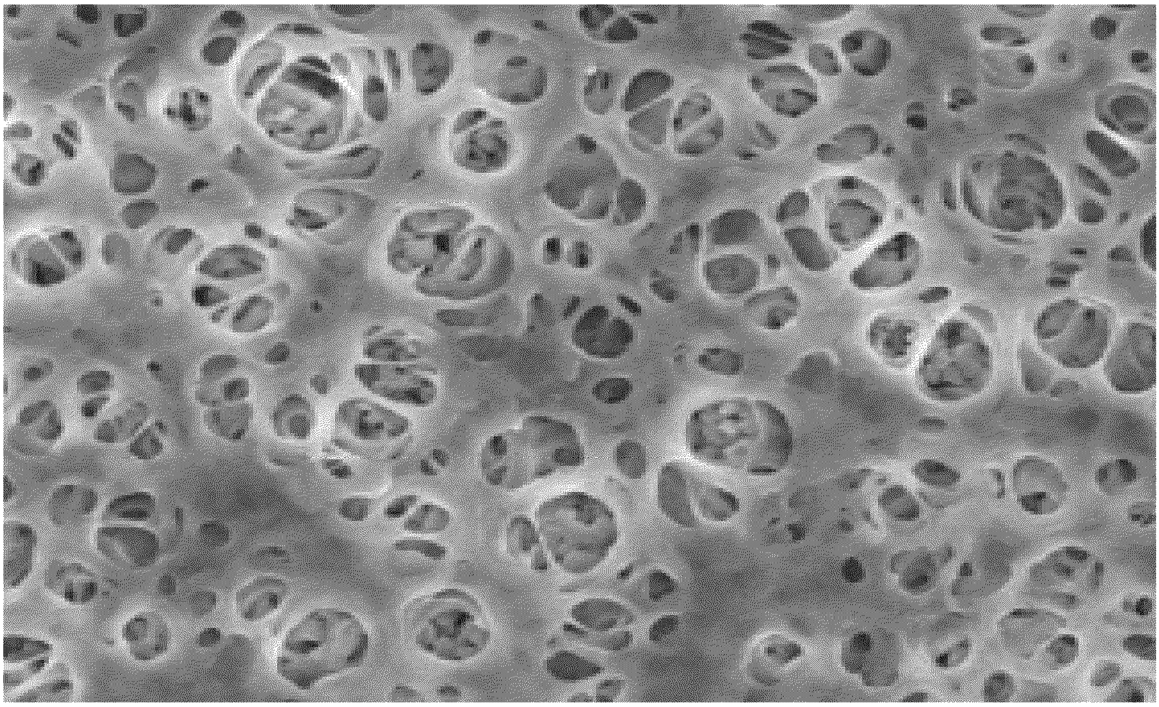

Europäisches Patentamt
European Patent Office
Office européen des brevets

# EUROPEAN SEARCH REPORT

Application Number
EP 25 17 3140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/219366 A1 (SAMSUNG SDI CO LTD [KR]) 16 November 2023 (2023-11-16) * claims 1,2,5,16; examples * ----- | 1-11 | INV. H01M10/0525 H01M50/403 H01M50/42 H01M50/426 H01M50/431 H01M50/446 H01M50/457 |
| Y | KR 2023 0126985 A (SAMSUNG SDI CO LTD [KR]) 31 August 2023 (2023-08-31) * examples * ----- | 1-11 | |

TECHNICAL FIELDS SEARCHED (IPC)
H01M

The present search report has been drawn up for all claims

1

| Place of search | Date of completion of the search | Examiner |
|---|---|---|
| Munich | 23 September 2025 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 3140

This annex lists the patent family members relating to the patent documents cited in the above-mentioned European search report. The members are as contained in the European Patent Office EDP file on
The European Patent Office is in no way liable for these particulars which are merely given for the purpose of information.

23-09-2025

| Patent document cited in search report | Publication date | Patent family member(s) | Publication date |
|---|---|---|---|
| WO 2023219366 A1 | 16-11-2023 | CN 119174045 A | 20-12-2024 |
| | | EP 4525183 A1 | 19-03-2025 |
| | | KR 20230157182 A | 16-11-2023 |
| | | WO 2023219366 A1 | 16-11-2023 |
| KR 20230126985 A | 31-08-2023 | NONE | |

EPO FORM P0459

For more details about this annex : see Official Journal of the European Patent Office, No. 12/82